Europäisches Patentamt

European Patent Office

Office européen des brevets

(19)

(11) **EP 1 652 873 A1**

(12)

# EUROPEAN PATENT APPLICATION
published in accordance with Art. 158(3) EPC

(43) Date of publication:
**03.05.2006 Bulletin 2006/18**

(21) Application number: **04746900.2**

(22) Date of filing: **02.07.2004**

(51) Int Cl.:
*C08J 3/22* (1974.07)    *B60C 1/00* (1968.09)
*C08K 3/04* (1990.01)    *C08K 3/22* (1990.01)
*C08K 3/36* (1990.01)    *C08L 21/00* (1985.01)

(86) International application number:
**PCT/JP2004/009431**

(87) International publication number:
**WO 2005/012396 (10.02.2005 Gazette 2005/06)**

(84) Designated Contracting States:
**DE ES FR GB IT**

(30) Priority: **05.08.2003  JP 2003286743**

(71) Applicant: **Bridgestone Corporation**
**Tokyo 104-8340 (JP)**

(72) Inventors:
• **YANAGISAWA, Kazuhiro**
**Kodaira-shi,**
**Tokyo 1878531 (JP)**

• **SOMENO, Kazuaki**
**Kodaira-shi,**
**Tokyo 1878531 (JP)**

(74) Representative: **Whalley, Kevin**
**Marks & Clerk**
**90 Long Acre**
**London WC2E 9RA (GB)**

(54) **RUBBER MASTER BATCH AND METHOD FOR PRODUCTION THEREOF**

(57)    This invention relates to a method for producing a rubber master batch capable of producing a rubber master batch having an excellent homogeneity without a special equipment, and more particularly to a method for producing a rubber master batch comprising a step of mixing a rubber solution with a slurry solution of a filler previously dispersed into a liquid, **characterized in that** a static mixer or a high shear mixer comprising a rotor and a stator portion is used in the mixing of the rubber solution and the slurry solution.

EP 1 652 873 A1

**Description**

TECHNICAL FIELD

This invention relates to a rubber master batch and a method for producing the same, a rubber composition using the rubber master batch, and a tire and a belt using the rubber composition, and more particularly to a method for producing a rubber master batch having an excellent homogeneity.

BACKGROUND ART

Heretofore, the use of a rubber-filler wet master batch (a rubber master batch) is known as a production method of a rubber composition having an excellent processability. In this case, the rubber master batch is obtained by mixing a rubber solution with a slurry obtained by previously mixing a filler such as carbon black, silica or the like with water at a certain ratio and finely dispersing the filler into the water by a mechanical force, then coagulating the resulting mixture by adding a coagulating agent such as an acid, an inorganic salt, an amine or the like, collecting the coagulated mass through filtration and drying it (see JP-B-36-22729 and JP-B-51-43851).

Among the above rubber master batches, a rubber master batch using styrene-butadiene copolymer rubber (SBR) latex as the rubber solution has been already produced on a commercial scale and is widely used. However, a rubber master batch using a rubber latex having high coagulating property such as a natural rubber latex or the like as the rubber solution is not yet industrialized because the coagulation reaction starts at the step of mixing the rubber solution with the filler slurry before the addition of the coagulating agent and hence (i) it is difficult to stir the mixture homogeneously and the homogeneity of the coagulated mixture is bad, or (ii) it is difficult to control a coagulation state.

On the other hand, JP-A-2000-507892 discloses a method for producing a rubber master batch without adding the coagulating agent and an example using the natural rubber latex as the rubber solution. However, this method requires a special equipment for introducing the filler slurry into the latex flow at a high speed, and hence there is a problem that the large-scale equipment investment is required.

Also, EP-A-1283219 discloses a method for producing a rubber master batch using a natural rubber latex in which an amide bond is decomposed, but the homogeneity of the resulting rubber master batch is not studied. In this literature, as the method for mixing the natural rubber latex with the filler slurry are mentioned a method wherein the filler slurry is charged into a homomixer and the latex is added dropwise with stirring, and a method wherein the filler slurry is added dropwise to the latex with stirring.

SUMMARY OF THE INVENTION

It is, therefore, an object of the invention to solve the above-mentioned problems of the conventional techniques and to provide a method for producing a rubber master batch capable of producing the rubber master batch having an excellent homogeneity without requiring the special equipment. Furthermore, it is another object of the invention to provide a rubber master batch obtained by the method, a rubber composition using the rubber master batch, and a tire and a belt using the rubber composition.

The inventors have made various studies in order to achieve the above objects and discovered that the rubber master batch having an excellent homogeneity can be obtained by mixing the rubber solution with the filler slurry by means of a static mixer or a high shear mixer, and as a result the invention has been accomplished.

That is, the method for producing the rubber master batch according to the invention is a method for producing a rubber master batch comprising a step of mixing a rubber solution with a slurry solution of a filler previously dispersed into a liquid, characterized in that a static mixer or a high shear mixer comprising a rotor and a stator portion is used in the mixing of the rubber solution and the slurry solution. Also, the rubber master batch of the invention is produced by this method.

In the method for producing the rubber master batch according to the invention, it is preferable that the filler is at least one selected from the group consisting of carbon black, silica and an inorganic filler represented by the following formula (I):

$$nM_1 \cdot xSiO_y \cdot zH_2O \qquad (I)$$

wherein $M_1$ is at least one selected from the group consisting of a metal of aluminum, magnesium, titanium, calcium or zirconium, oxides and hydroxides of these metals, their hydrates, and carbonates of these metals, n is an integer of 1-5, x is an integer of 0-10, y is an integer of 2-5, and z is an integer of 0-10.

In a preferable embodiment of the method for producing the rubber master batch according to the invention, the rubber solution is a water-based rubber latex. In this case, it is more preferable that the rubber latex is a natural rubber latex. Furthermore, the natural rubber latex is particularly preferable that an amide bond in the latex is decomposed with a protease.

In another preferable embodiment of the method for producing the rubber master batch according to the invention, the water-based rubber latex is mixed with the slurry solution, and the resulting mixture is coagulated to have a water content of 5-40 mass%, and the coagulated mass is dried while applying a mechanical shearing force. In this case, it is more preferable that the drying is performed by a screw-type continuous kneader.

Furthermore, the rubber composition of the invention is characterized by compounding the rubber master batch obtained by the above-described method. The rubber composition may be preferably used in a tire and a belt.

According to the method for producing the rubber master batch of the invention, the rubber master batch having an excellent homogeneity can be produced without the special equipment.

BEST MODE FOR CARRYING OUT THE INVENTION

The invention will be described in detail below. The method for producing the rubber master batch according to the invention comprises a step of mixing the rubber solution and the slurry solution of the filler previously dispersed into the liquid, and is characterized in that the static mixer or the high shear mixer comprising the rotor and the stator portion is used in the mixing of the rubber solution and the slurry solution at the step, and does not need the special equipment. Also, the rubber master batch of the invention is obtained by this method and is very high in the homogeneity.

When the static mixer is used in the mixing step, it is considered that since the static mixer has not a driving portion, a shearing force is hardly applied to the mixture, and also even if the coagulation is partially caused, since the resulting coagulated mass has a structure of hardly causing the clogging, the mixing can be carried out homogeneously while maintaining a good productivity. Therefore, the resulting rubber master batch is excellent in the homogeneity.

On the other hand, when the high shear mixer is used in the mixing step, it is considered that the homogeneity of the resulting rubber master batch as a whole is improved because even if the rubber solution and the filler slurry are coagulated inhomogeneously, the coagulated mass is crushed finely by the high shearing force.

The static mixer used in the production method of the invention is a static-type mixing machine having no driving portion, and is referred to as a motionless mixer. In the static mixer, fluid is sequentially agitated and mixed by fixed elements, and a size of dispersed particles becomes smaller every the pass through the element. The static mixer is a common mixer, and for example, commercially available products supplied by Noritake Co., Limited, TAH Company in USA, KOFLO Company in USA, TOKUSHU KIKA KOGYO Co., Ltd. and so on can be used.

On the other hand, the high shear mixer used in the production method of the invention comprises the rotating rotor and the fixed stator portion. In the high shear mixer, the rotor rotating at a high speed and the fixed stator portion are arranged at a narrow clearance, and a high shearing force is produced by the rotation of the rotor. At this point, the high shearing means a shear speed of not less than 2000/s and is preferable to be not less than 4000/s. As the high shear mixer can be used commercially available products. For example, a homomixer made by TOKUSHU KIKA KOGYO Co., Ltd., a colloid mill made by PUC Company in Germany, high shear mixers made by CAVITRON Company in Germany and SILVERSON Company in UK and so on can be used preferably.

As the rubber solution are mentioned a rubber latex in which particles of a rubber component are dispersed in the water and a solution in which the rubber component is dissolved in an organic solvent. As the rubber component are mentioned natural rubber (NR) as well as synthetic diene-based rubbers such as styrene-butadiene rubber (SBR), acrylonitrile-butadiene rubber (NBR), chloroprene rubber (CR) and the like. They may be used alone or in a combination of two or more. The concentration of the rubber component in the rubber solution is preferably 5-60 mass%, more preferably 10-40 mass%.

As the rubber solution, water-based rubber latexes are preferable. Among these rubber latexes, natural rubber latex is particularly preferable. According to the method of the invention, even if the water-based latex of natural rubber or the like easily causing coagulation is used, the resulting rubber master batch is high in the homogeneity owing to the above-mentioned reasons. In case of using the natural rubber latex, the resulting rubber master batch is excellent in the mechanical properties, low heat build-up and wear resistance.

In the natural rubber latex, an amide bond in the latex may be decomposed with a protease (a protein-splitting enzyme). By decomposing the amide bond in the natural rubber latex can be suppressed entwinement of molecules due to hydrogen bond of the amide bond to control the rise of the viscosity of rubber and to improve the processability.

The protease has a nature of hydrolyzing the amide bond existing in a surface layer component of the natural rubber latex particles, and includes, for example, an acidic protease, a neutral protease, an alkaline protease and so on. In the production method of the invention, the alkaline protease is particularly preferable in view of the effects.

When the amide bond is decomposed with the protease, such a decomposing treatment may be performed under a condition suitable for the enzyme to be mixed. For example, when Alkalase 2.5L type DX made by NOVOZYMES is mixed with the natural rubber latex, it is preferable to usually conduct the treatment within a temperature range of 20-80°C. In this case, pH is usually adjusted to a range of 6.0-12.0. Also, the amount of the protease added is usually a range of 0.01-2 mass%, preferably a range of 0.02-1 mass% based on the natural rubber latex.

In the step of decomposing the amide bond in the natural rubber latex, it is also preferable to add a surfactant for improving the stability of the latex. As the surfactant can be used an anionic surfactant, a cationic surfactant, a nonionic surfactant and an amphoteric surfactant, and among them the anionic surfactant and the nonionic surfactant are particularly preferable. The amount of the surfactant added can be properly adjusted in accordance with the nature of the natural rubber latex, but is usually a range of 0.01-2 mass%, preferably a range of 0.02-1 mass% based on the natural rubber latex.

The slurry solution is formed by previously dispersing the filler into the liquid. As the filler are mentioned carbon black, silica and an inorganic filler represented by the following formula (I):

$$nM_1 \cdot xSiO_y \cdot zH_2O \qquad (I)$$

wherein $M_1$ is at least one selected from the group consisting of a metal of aluminum, magnesium, titanium, calcium or zirconium, oxides and hydroxides of these metals, their hydrates, and carbonates of these metals, n is an integer of 1-5, x is an integer of 0-10, y is an integer of 2-5, and z is an integer of 0-10.

As the carbon black are mentioned various grades of carbon black such as SAF, HAF, ISAF, FEF, GPF and the like. As the silica are mentioned precipitated silica, fumed silica, colloidal silica and so on. As the inorganic filler represented by the formula (I) are mentioned alumina ($Al_2O_3$) such as $\gamma$-alimina, $\alpha$-alumina or the like; alumina mono-hydrate ($Al_2O_3 \cdot H_2O$) such as boehmite, diaspore or the like; aluminum hydroxide [$Al(OH)_3$] such as gibbsite, bayerite or the like; aluminum carbonate [$Al_2(CO_3)_3$], magnesium hydroxide [$Mg(OH)_2$], magnesium oxide (MgO), magnesium carbonate ($MgCO_3$), talc ($3MgO \cdot 4SiO_2 \cdot H_2O$), attapulgite ($5MgO \cdot 8SiO_2 \cdot 9H_2O$), titanium white ($TiO_2$), titanium black ($TiO_{2n-1}$), calcium oxide (CaO), calcium hydroxide [$Ca(OH)_2$], aluminum magnesium oxide ($MgO \cdot Al_2O_3$), clay ($Al_2O_3 \cdot 2SiO_2$), kaolin ($Al_2O_3 \cdot 2SiO_2 \cdot 2H_2O$), pyrophyllite ($Al_2O_3 \cdot 4SiO_2 \cdot H_2O$), bentonite ($Al_2O_3 \cdot 4SiO_2 \cdot 2H_2O$), aluminum silicate ($Al_2SiO_5$, $Al_4 \cdot 3SiO_4 \cdot 5H_2O$, and so on), magnesium silicate ($Mg_2SiO_4$, $MgSiO_3$, and so on), calcium silicate ($Ca_2SiO_4$, and so on), aluminum calcium silicate ($Al_2O_3 \cdot CaO \cdot 2SiO_2$, and so on), magnesium calcium silicate ($CaMgSiO_4$), calcium carbonate ($CaCO_3$), zirconium oxide ($ZrO_2$), zirconium hydroxide [$ZrO(OH)_2 \cdot nH_2O$], zirconium carbonate [$Zr(CO_3)_2$], and crystalline aluminosilicates containing charge-compensating hydrogen, alkali metal or alkaline earth metal such as various zeolites. These fillers may be used alone or in a combination of two or more. Among these fillers, the carbon black, silica, alumina, alumina hydrate, clay and calcium carbonate are preferable.

In the production of the slurry solution can be used a known method and is not particularly limited. For example, the slurry solution can be prepared by charging predetermined amounts of the filler and the water into the homomixer and agitating for a certain time. Also, a high shear mixer of rotor-stator type, a high-pressure homogenizer, an ultrasonic homogenizer, a colloid mill and so on may be used in the production of the slurry solution. For example, the slurry solution can be prepared by charging predetermined amounts of the filler and the water into the colloid mill and then agitating at a high speed for a certain time. At this point, the concentration of the filler in the slurry solution is preferably 0.5-60 mass%, more preferably 1-30 mass%. Also, it is preferable to compound the filler in an amount of 5-100 parts by mass, more preferably 10-70 parts by mass based on 100 parts by mass of the rubber component. When the amount of the filler compounded is less than 5 parts by mass, there is a possibility that sufficient reinforcing effect cannot be obtained, while when it exceeds 100 parts by mass, there is a possibility that the processability is deteriorated.

In the production method of the invention, after the rubber solution is mixed with the filler slurry solution, the resulting mixture is coagulated. As the coagulation method is mentioned a method of adding a coagulating agent to the mixture to conduct solidification. However, the solidification may be conducted by mixing the rubber solution with the slurry solution, and in this case the addition of the coagulating agent is not necessarily required. The coagulating agent is not particularly limited, and includes an acid such as formic acid, sulfuric acid or the like, and a salt such as sodium chloride or the like. When the water-based rubber latex is used as the rubber solution, the resulting coagulated mass has usually a water content of 5-40 mass%, and is dried and used as a rubber composition or the like.

To the rubber master batch may be added additives such as a surfactant, a vulcanizing agent, an antioxidant, a colorant, a dispersant and the like, if necessary. These additives are preferable to be added to the rubber solution and/or the slurry solution prior to the mixing of the rubber solution and the slurry solution.

In the method for producing the rubber master batch according to the invention, the dying is usually performed as a final step. In the drying can be used usual dryers such as a vacuum dryer, an air dryer, a drum dryer, a band dryer and so on. In order to further improve the dispersibility and homogeneity of the filler, it is preferable to conduct the drying while applying a mechanical shearing force. By drying while applying the mechanical shear force can be obtained a rubber having excellent processability, reinforcing effect and low fuel consumption. The drying can be carried out by a usual milling machine, but it is preferable to use a screw-type continuous milling machine from a viewpoint of the industrial productivity, and it is more preferable to use a corotating or counterrotating biaxial milling extruder. As the screw-type continuous milling machine can be used commercially available products, for example, a biaxial milling extruder made by Kobe Steel, Ltd. and so on.

The rubber composition according to the invention comprises the rubber master batch obtained by the above-described method. Since the above rubber master batch is excellent in the homogeneity, the rubber composition of the invention is also excellent in the homogeneity. To the rubber composition can be added additives usually used in the rubber industry such as a vulcanizing agent, a vulcanization accelerator, an antioxidant, a scorch retarder, zinc oxide, stearic acid and the like within a scope of not damaging the object of the invention. Furthermore, the rubber composition of the invention can be preferably used in rubber articles such as a tire and a belt.

The following examples are given in illustration of the invention and are not intended as limitations thereof.

(Comparative Example 1)

A rubber solution A is prepared by diluting a field latex of a natural rubber (pH is adjusted to 10.5 with aqueous ammonia, a content of rubber component : 27.4 mass%) with deionized water so as to adjust the content of rubber component to 20 mass%. Also, carbon black N110 is added to deionized water and dispersed in the form of a slurry by means of a homodisper [made by TOKUSHU KIKA KOGYO Co., Ltd.] to prepare a filler slurry B (a content of carbon black: 5 mass%). The rubber solution A is charged at a flow rate of 500mL/min and the filler slurry B is simultaneously charged at a flow rate of 1000mL/min into a tank provided with an impeller-type agitator for 5 minutes with agitating. After the completion of the charge, formic acid is added with agitating to adjust pH to about 5 to complete the coagulation. The resulting coagulated mass is collected with a screen having a mesh size of 30, washed with water and dried to obtain a rubber master batch.

(Example 1)

The above-described rubber solution A and filler slurry B are simultaneously charged into a static mixer [made by Noritake Co., Limited, an outer diameter: 1 inch, number of elements: 12] at the same flow rate as in Comparative Example 1, and the resulting mixture is charged into the tank and then formic acid is added with agitating to adjust pH to about 5 to thereby complete the coagulation. The resulting coagulated mass is collected with the screen having the mesh size of 30, washed with water and dried to obtain a rubber master batch.

(Example 2)

The above-described rubber solution A and filler slurry B are simultaneously charged into a colloid mill [a diameter of a rotor: 50 mm, a clearance between a rotor and a stator: 0.7 mm] at the same flow rate as in Comparative Example 1, passed therethrough once at a revolution number of 3000 rpm and charged into the tank, and then formic acid is added with agitating to adjust pH to about 5 to thereby complete the coagulation. The resulting coagulated mass is collected with the screen having the mesh size of 30, washed with water and dried to obtain a rubber master batch.

<Evaluation of homogeneity>

About 1g of a sample is randomly picked from 10 points in about 600g of each of the above rubber master batches, and cut into a specimen having a size of 1 cubic mm, which is precisely weighed and placed into a crucible, and heated in an electric heating furnace at 750°C for 5 minutes to combust the rubber component. After allowing to cool, the resulting residue is precisely weighed and then the amount of the filler compounded is calculated according to the following equation (II):

$$\text{Amount of the filler compounded} = \text{mass of residue} / (\text{mass before combustion} - \text{mass of residue}) \times 100 \quad \cdots\cdots (II)$$

An average amount of 10 samples and its standard deviation σ are calculated to obtain results as shown in Table 1. The smaller the value of σ, the smaller the scattering and the better the homogeneity.

[Table 1]

|       | Comparative Example 1 | Example 1 | Example 2 |
|-------|-----------------------|-----------|-----------|
| n=1   | 54.0                  | 50.7      | 50.5      |
| n=2   | 57.3                  | 50.6      | 48.8      |
| n=3   | 49.1                  | 50.2      | 49.6      |
| n=4   | 53.4                  | 49.5      | 49.8      |
| n=5   | 50.5                  | 51.0      | 49.3      |
| n=6   | 58.6                  | 49.9      | 49.2      |
| n=7   | 48.6                  | 49.9      | 48.9      |

Table continued

| | Comparative Example 1 | Example 1 | Example 2 |
|---|---|---|---|
| n=8 | 56.1 | 50.8 | 50.1 |
| n=9 | 51.9 | 50.0 | 49.7 |
| n=10 | 55.0 | 50.4 | 50.1 |
| Average | 53.5 | 50.3 | 49.6 |
| σ | 3.4 | 0.5 | 0.6 |

As seen from the above, the rubber master batches of the examples are homogeneously coagulated because the scattering in the amount of the filler compounded is small and the average amount of the filler compounded is near a theoretical value, i.e. 50. On the other hand, the rubber master batch of the comparative example is large in the difference between the average amount of the filler compounded and the theoretical value and the scattering of the amount of the filler compounded and is inferior in the homogeneity.

**Claims**

1.  A method for producing a rubber master batch comprising a step of mixing a rubber solution with a slurry solution of a filler previously dispersed into a liquid, **characterized in that** a static mixer or a high shear mixer comprising a rotor and a stator portion is used in the mixing of the rubber solution and the slurry solution.

2.  A method for producing a rubber master batch according to claim 1, wherein the filler is at least one selected from the group consisting of carbon black, silica and an inorganic filler represented by the following formula (I):

$$nM_1 \cdot xSiO_y \cdot zH_2O \qquad (I)$$

wherein $M_1$ is at least one selected from the group consisting of a metal of aluminum, magnesium, titanium, calcium or zirconium, oxides and hydroxides of these metals, their hydrates, and carbonates of these metals, n is an integer of 1-5; x is an integer of 0-10, y is an integer of 2-5, and z is an integer of 0-10.

3.  A method for producing a rubber master batch according to claim 1, wherein the rubber solution is a water-based rubber latex.

4.  A method for producing a rubber mater batch according to claim 3, wherein the rubber latex is a natural rubber latex.

5.  A method for producing a rubber master batch according to claim 4, wherein an amide bond in the natural rubber latex is decomposed with a protease.

6.  A method for producing a rubber master batch according to claim 3, wherein the water-based rubber latex is mixed with the slurry solution, and the resulting mixture is coagulated to have a water content of 5-40 mass%, and the coagulated mass is dried while applying a mechanical shearing force.

7.  A method for producing a rubber master batch according to claim 6, wherein the drying is performed by a screw-type continuous milling machine.

8.  A rubber master batch produced by the method as claimed in any one of claims 1-7.

9.  A rubber composition comprising a rubber master batch as claimed in claim 8.

10. A tire using a rubber composition as claimed in claim 9.

11. A belt using a rubber composition as claimed in claim 9.

## INTERNATIONAL SEARCH REPORT

| | International application No. |
|---|---|
| | PCT/JP2004/009431 |

**A. CLASSIFICATION OF SUBJECT MATTER**
Int.Cl$^7$ C08J3/22, B60C1/00, C08K3/04, C08K3/22, C08K3/36, C08L21/00

According to International Patent Classification (IPC) or to both national classification and IPC

**B. FIELDS SEARCHED**

Minimum documentation searched (classification system followed by classification symbols)
Int.Cl$^7$ C08J3/00-3/22, C08L7/00-21/00

Documentation searched other than minimum documentation to the extent that such documents are included in the fields searched

| | | | |
|---|---|---|---|
| Jitsuyo Shinan Koho | 1926-2004 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | US 2003/0134943 A1  (RHONE-POULENC CHIMIE), 17 July, 2003 (17.07.03), Claims 1, 9, 33, 36, 37 & JP 2003-520880 A Claims 1, 9, 33, 36, 37 & EP 1255786 A1 | 1-11 |
| A | JP 2002-363295 A  (Sumitomo Rubber Industries, Ltd.), 18 December, 2002 (18.12.02), Claim 1; Par. No. [0010] (Family: none) | 1-11 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 14 July, 2004 (14.07.04) | 03 August, 2004 (03.08.04) |

| Name and mailing address of the ISA/ | Authorized officer |
|---|---|
| Japanese Patent Office | |
| Facsimile No. | Telephone No. |

Form PCT/ISA/210 (second sheet) (January 2004)

## INTERNATIONAL SEARCH REPORT

International application No.

PCT/JP2004/009431

C (Continuation). DOCUMENTS CONSIDERED TO BE RELEVANT

| Category* | Citation of document, with indication, where appropriate, of the relevant passages | Relevant to claim No. |
|---|---|---|
| A | EP 1283219 A2 (BRIDGESTONE CORP.), 12 February, 2003 (12.02.03), Claim 1; Par. No. [0083] & JP 2003-41055 A Claim 1; Par. No. [0018], & US 2003/0088006 A1 | 1-11 |

Form PCT/ISA/210 (continuation of second sheet) (January 2004)